# EUROPÄISCHE PATENTSCHRIFT

(11) **EP 2 052 965 B1**
(45) Veröffentlichungstag und Bekanntmachung des Hinweises auf die Patenterteilung: **15.05.2013**
(21) Anmeldenummer: 08004469.6
(22) Anmeldetag: 11.03.2008
(51) Int. Cl.: B64C 11/42, B63H 3/08

(54) **Hydraulischer Verstellpropeller**
Hydraulic adjustable propeller
Hélice à réglage hydraulique

(30) Priorität: 11.01.2008 DE 102008004197
(43) Veröffentlichungstag der Anmeldung: 29.04.2009
(73) Patentinhaber: MT-Propeller Entwicklung GmbH, 94348 Atting (DE)
(72) Erfinder: Mühlbauer, Gerd, 94360 Mitterfels (DE)
(74) Vertreter: Grünberg, Thomas

(56) Entgegenhaltungen:
- EP-A1- 1 623 921
- DE-A1- 19 743 739
- DE-C2- 19 600 660
- GB-A- 737 745

## Beschreibung

Die Erfindung betrifft einen redundanten hydraulischen Verstellpropeller für ein Luft-, Land- oder Wasserfahrzeug mit den Merkmalen des Oberbegriffs des Patentanspruchs 1.

Ein derartiger Verstellpropeller ist aus der Praxis, beispielsweise aus GB 737 745, welches die Merkmale des Oberbegriffs des Patentanspruchs 1 zeigt, bekannt und umfasst eine hydraulische Einrichtung, die mit einer Kolbeneinheit versehen ist, mittels derer Propellerblätter hinsichtlich ihres Anstellwinkels verstellbar sind.

Grundsätzlich sind verschiedene Vorrichtungen und Verfahren bekannt, um den Anstellwinkel von Propellerblättern zu verstellen. Üblicherweise umfassen die bekannten Vorrichtungen und Verfahren einfach oder doppelt wirkende hydraulische Systeme, mittels derer der Blattwinkel für eine zugeordnete Triebwerksleitung, eine zugeordnete Propellerdrehzahl und Vorwärtsgeschwindigkeit automatisch und stufenlos verstellt werden kann. Die bekannten Systeme haben einen Verstellkolben, so dass bei einem Ausfall des hydraulischen Systems eine Verstellung des Anstell- bzw. Blattwinkels nicht möglich ist. Zur Verhinderung von gefährlichen Überdrehzahlen sind daher Einrichtungen zur Blockierung der Verstellbewegung der Propellerblätter vorgesehen. Insbesondere ist es bekannt, Gegengewichte im Bereich der Blattwurzel der einzelnen Propellerblätter zu installieren. Dies ist mit unerwünschtem Gewicht verbunden.

Übliche, doppelt wirkende Verstellsysteme umfassen zur Verhinderung gefährlicher Überdrehzahlen beim Ausfall des Hydrauliksystems eine so genannte Steigungsblockierung, die den Blattwinkel in derjenigen Stellung blockiert, der zum Zeitpunkt eines Druckverlustes vorliegt.

Der Erfindung liegt die Aufgabe zugrunde, einen hydraulischen Verstellpropeller bereit zu stellen, der mit einem hydraulischen System versehen ist, welches eine hohe Betriebssicherheit des Propellers ohne die vorgenannten Sicherheitseinrichtungen gewährleistet.

Diese Aufgabe ist erfindungsgemäß durch den hydraulischen Verstellpropeller mit den Merkmalen des Patentanspruchs 1 gelöst.

Gemäß der Erfindung wird mithin ein redundanter hydraulischer Verstellpropeller für ein Luft-, Land- oder Wasserfahrzeug vorgeschlagen, umfassend mindestens zwei Propellerblätter, die im Bereich einer Propellernabe gelagert sind und hinsichtlich ihres Anstellwinkels mittels einer hydraulisch angetriebenen Kolbeneinheit verstellbar sind. Die Kolbeneinheit umfasst zwei mechanisch miteinander verbundene Verstellkolben, die jeweils einem unabhängigen Hydraulikkreis zugeordnet sind.

Bei dem Verstellpropeller nach der Erfindung ist auch bei Ausfall eines der beiden unabhängigen Hydraulikkreise eine Ansteuerung der Kolbeneinheit möglich, so dass auch dann noch eine Verstellung des Anstellwinkels der Propellerblätter gewährleistet ist. Dies gewährleistet eine hohe Betriebssicherheit eines Verstellpropellers ohne dass Gegengewichte im Bereich der Blattwurzeln oder eine Steigungsblockierung der oben beschriebenen Art vorgesehen werden müssten. Die Größe der beiden Verstellkolben ist zweckmäßigerweise so bemessen, dass bei Ausfall eines Hydraulikkreises die Verstellung der Propellerblätter allein durch den anderen Hydraulikkreis möglich ist.

Bei einer bevorzugten Ausführungsform des hydraulischen Verstellpropellers nach der Erfindung umfassen die beiden Hydraulikkreise eine gemeinsame Ventileinheit, mittels derer die beiden Verstellkolben synchron mit einem gewünschten Servodruck beaufschlagbar sind. Diese Ventileinheit umfasst beispielsweise zwei Steuerschieber, die mittels eines gemeinsamen Aktuators antreibbar sind und den Hydraulikdruck bzw. Servodruck, mit dem die beiden Kolben der im Bereich der Propellernabe angeordneten Kolbeneinheit beaufschlagt werden, eingestellt wird.

Bei einer speziellen Ausführungsform des Ventils nach der Erfindung können die Ventileinheit und die Verstellkolben über ein doppelwandiges Steuerrohr miteinander verbunden sein, welches einen Ringkanal, der einem der beiden Hydraulikkreise zugeordnet ist, und einen Axialkanal umfasst, der dem anderen der beiden Hydraulikkreise zugeordnet ist.

Das Steuerrohr kann mit den beiden Steuerschiebern der Ventileinheit zusammenwirken, welche jeweils einem der Hydraulikkreise zugeordnet sind. Insbesondere weist ein Außenrohr des doppelwandigen Steuerrohrs zwei axial zueinander versetzte Steueröffnungen auf, von denen eine zu dem Axialkanal und die andere zu dem Ringkanal des Steuerrohrs führt.

Das Steuerventil umfasst insbesondere zwei unabhängige Hydraulikkammern, die von zwei unabhängigen Druckquellen gespeist werden und über das Steuerrohr hydraulisch mit Druckräumen verbunden sind, die jeweils einem der Verstellkolben zugeordnet sind. Das Steuerrohr stellt auch eine mechanische Verbindung zwischen der Ventileinheit und den Kolben der Kolbeneinheit her.

Die Ventil- bzw. Steuereinheit kann auch zwei unabhängig voneinander betätigte Steuerschieber umfassen, die jeweils einem der Verstellkolben zugeordnet sind und unabhängig voneinander die beiden Verstellkolben mit einem Hydraulikfluid versorgen, um die Blattverstellung im Falle des Ausfalls eines Hydraulikkreises aufrecht zu erhalten.

Die Steuereinheit ist insbesondere an einem Getriebe eines Triebwerks zum rotierenden Antrieb des Propellers befestigt. Das Steuerrohr durchgreift zweckmäßigerweise das Getriebe, so dass es in die Propellernabe eingreift und die Hydraulikverbindungen zwischen der Steuereinheit und den Druckräumen für die Verstellkolben herstellt.

Die für die beiden Hydraulikkreise verwendete, unter Druck stehende Hydraulikflüssigkeit kann statisch mit konstantem Druck mittels einer Pumpe oder dynamisch mittels eines Propeller-Reglers geregelt sein.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines Verstellpropellers nach der Erfindung ist in der Zeichnung schematisch vereinfacht dargestellt und wird in der nachfolgenden Beschreibung näher erläutert. Es zeigt:
- Fig. 1: einen Längsschnitt durch eine Propellernabe; und
- Fig. 2: einen Längsschnitt durch eine Steuereinheit zur Verstellung des Anstellwinkels von Propellerblättern.

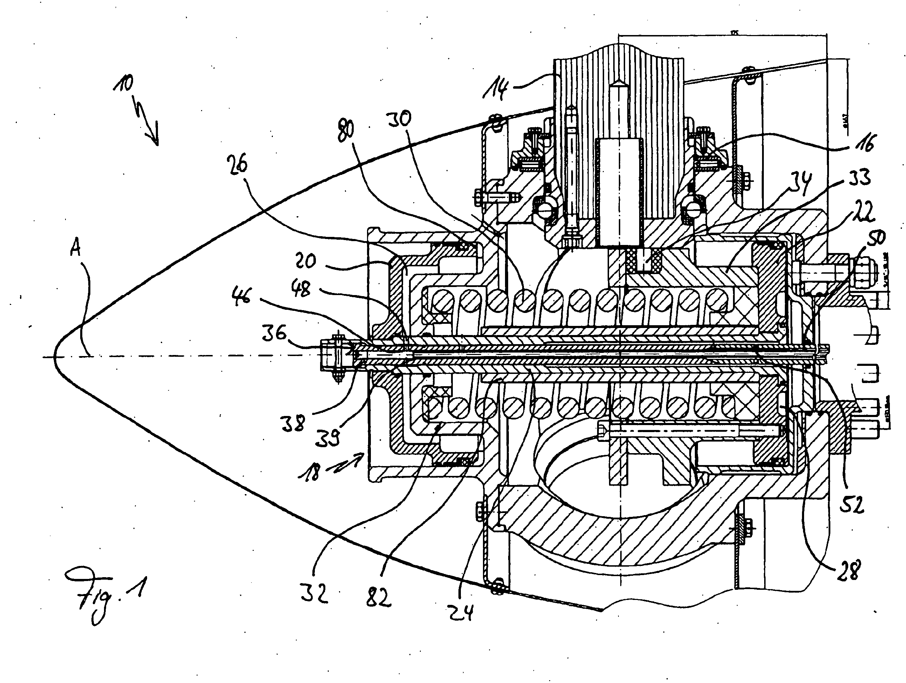

In Fig. 1 ist ein hydraulisch verstellbarer Verstellpropeller 10 dargestellt, der eine Propellernabe 12 und mindestens zwei Propellerblätter 14 mit jeweils zugeordneten Lagerungen 16 aufweist, die hinsichtlich ihres Anstellwinkels einstellbar sind.

In der Propellernabe 12 ist eine Kolbeneinheit 18 dargestellt, die zwei Verstellkolben 20 und 22 umfasst, welche über ein Verbindungsrohr 24 mechanisch miteinander verbunden sind, welches in der Achse A der Propellernabe 12 angeordnet ist. Der Verstellkolben 20 grenzt an einen ersten Druckraum 26, welcher einem ersten Hydraulikkreis zugeordnet ist. Der Verstellkolben 22 grenzt an einen zweiten Druckraum 28, der einem zweiten Hydraulikreis zugeordnet ist.

Des Weiteren ist in der Propellernabe 12 eine Rückstellfeder 30 angeordnet, die sich an einem Nabendeckel 32 abstützt und an der dem Druckraum 28 abgewandten Seite des Verstellkolbens 22 auf die Kolbeneinheit 18 wirkt und diese so in die in Fig. 1 dargestellte Endstellung vorspannt. Mit der Kolbeneinheit 18 ist eine Kolbenverlängerung 33 verbunden, die über einen Zapfen 34 bei einem Verfahren der Kolbeneinheit 18 eine Änderung des Anstellwinkels der Propellerblätter 14 bewirkt.

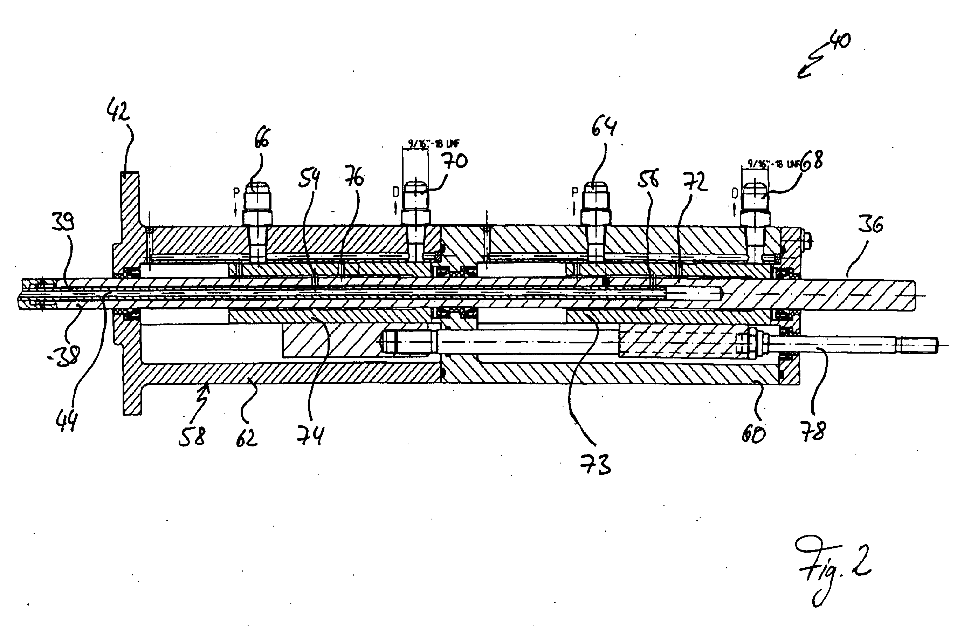

In dem Verbindungsrohr 24 ist ein doppelwandiges Steuerrohr 36 angeordnet, welches fest mit dem Verbindungsrohr 24 verbunden ist, ein Außenrohr 38 und ein Innenrohr 39 aufweist, sowie die Druckräume 26 und 28 mit einer Steuereinheit 40 hydraulisch verbindet, welche in Fig. 2 dargestellt ist: Die Steuereinheit 40 ist über einen Flansch 42 an der Rückseite eines nicht näher dargestellten Getriebes des ebenfalls nicht näher dargestellten Triebwerks befestigt. Das doppelwandige Steuerrohr 36 durchgreift mithin das Getriebe.

Das Innenrohr 39 des Steuerrohrs 36 umschließt einen ersten Hydraulikkanal 44, der dem ersten Hydraulikkreis zugeordnet ist und über eine Querbohrung 46 des Außenrohrs 38 und eine mit der Querbohrung 46 fluchtenden Querbohrung 48 des Verbindungsrohrs 24 mit dem Druckraum 26 verbunden ist, der dem ersten Verstellkolben 20 zugeordnet ist.

Zwischen dem Innenrohr 39 und dem Außenrohr 38 ist ein zweiter Hydraulikkanal 50 ausgebildet, welcher über eine Querbohrung 52 des Außenrohrs 38 mit dem Druckraum 28 verbunden ist, welcher dem zweiten Verstellkolben 22 zugeordnet ist.

Zur Versorgung der Hydraulikkanäle 44 und 50 mit Hydrauliköl weist das Außenrohr 38, welches an der der Propellernabe 12 abgewandten Seite verschlossen ausgebildet ist, zwei weitere Querbohrungen 54 und 56 auf, wobei die Querbohrung 56 in Fluidverbindung mit dem axialen Hydraulikkanal 44 steht und die Querbohrung 54 in Fluidverbindung mit dem als Ringkanal ausgebildeten Hydraulikkanal 50 steht.

Die Steuereinheit 40, die von dem Steuerrohr 36 durchgriffen ist, weist ein zweiteiliges Ventilgehäuse 58 auf, wobei ein erstes Ventilgehäuseelement 60 dem ersten Hydraulikkreis und ein zweites Ventilgehäuseelement 62, das mit dem ersten Ventilgehäuseelement 60 verbunden ist, dem zweiten Hydraulikkreis zugeordnet ist. Die beiden Ventilgehäuseelemente 60 und 62 sind jeweils mit einem Servodruckanschluss 64 bzw. 66 versehen, welcher mit einer dem jeweiligen Hydraulikkreis zugeordneten Druckquelle verbunden ist, die als Pumpe oder auch als Propellerregler ausgebildet sein kann. Des Weiteren weisen die beiden Ventilgehäuseelemente 60 und 62 jeweils einen Rücklaufanschluss 68 bzw. 70 auf.

In dem Ventilgehäuseelement 60 ist ein erster Steuerschieber 73 angeordnet, der über Steuerschlitze 72 mit der Querbohrung 56 des Außenrohrs 38 des Steuerrohrs 36 zusammenwirkt. In dem Ventilgehäuseelement 62 ist ein zweiter Steuerschieber 74 verschiebbar angeordnet, der über Steuerschlitze 76 mit der Querbohrung 54 des Außenrohrs 38 des Steuerrohrs 36 zusammenwirkt, welche dem zweiten Hydraulikkreis zugeordnet ist.

Die Steuerschieber 73 und 74 sind mit einer gemeinsamen Betätigungsstange 78 verbunden, die sich in axialer Richtung der Steuereinheit 40 erstreckt und mittels eines geeigneten Betätigungsmittels in axialer Richtung zur Verschiebung der Steuerschieber 73 und 74 verschiebbar ist. Durch ein Verschieben der Steuerschieber 73 und 74 mittels der Betätigungsstange 78 ändert sich der über die Hydraulikkanäle 44 und 50 zu den Verstellkolben 20 und 22 geführte Hydraulikdruck, so dass die Kolbeneinheit 18 in axialer Richtung verschoben wird und eine Änderung des Anstellwinkels der Propellerblätter 14 bewirkt. Bei einer Verringerung des Servodrucks in den Druckräumen 26 und 28 werden die Kolben 20 und 22 durch die Wirkung der Rückstellfeder 30 und die von den Propellerblättern 14 ausgeübten Rückstellkräften maximal bis zu einem mechanischen Anschlag 80 für eine Brems(Reverse)- oder Segelstellung verschoben. In der anderen Richtung ist ein mechanischer Anschlag 82 in Form einer Hülse vorgesehen, die das Verbindungsrohr 24 umgreift und mit dem Nabendeckel 32 der Propellernabe 12 zusammenwirkt.

## Patentansprüche

1. Hydraulischer Verstellpropeller für ein Luft-, Land- oder Wasserfahrzeug, mit mindestens zwei Propellerblättern (14), die im Bereich einer Propellernabe (12) gelagert sind und hinsichtlich ihres Anstellwinkels mittels einer hydraulisch angetriebenen Kolbeneinheit (18) verstellbar sind, **dadurch gekennzeichnet, dass** die Kolbeneinheit (18) zwei über ein Verbindungsrohr (24) mechanisch miteinander verbundene Verstellkolben (20, 22) umfasst, die jeweils einem unabhängigen Hydraulikkreis zugeordnet sind.

2. Hydraulischer Verstellpropeller nach Anspruch 1, **dadurch gekennzeichnet, dass** die beiden Hydraulikkreise eine gemeinsame Ventileinheit (40) umfassen, mittels derer die beiden Verstellkolben (20, 22) synchron mit einem gewünschten Servodruck beaufschlagbar sind.

3. Hydraulischer Verstellpropeller nach Anspruch 2, **dadurch gekennzeichnet, dass** die Ventileinheit (40) und die Verstellkolben (20, 22) über ein doppelwandiges Steuerrohr (36) miteinander verbunden sind, das einen Ringkanal (50), der einem der beiden Hydraulikkreise zugeordnet ist, und einen Axialkanal (44) umfasst, der dem anderen der beiden Hydraulikkreise zugeordnet ist.

4. Hydraulischer Verstellpropeller nach Anspruch 3, **dadurch gekennzeichnet, dass** das Steuerrohr (36) mit zwei Steuerschiebern (73, 74) der Ventileinheit (40) zusammenwirkt, die jeweils einem der Hydraulikkreise zugeordnet sind.

5. Hydraulischer Verstellpropeller nach einem der Ansprüche 2 bis 4, **dadurch gekennzeichnet, dass** die Ventileinheit (40) zwei unabhängige Hydraulikkammern umfasst, die von zwei unabhängigen Druckquellen gespeist werden und über das Steuerrohr (36) hydraulisch mit Druckräumen (26, 28) verbunden sind, die jeweils einem der Verstellkolben (20, 22) zugeordnet sind.

6. Hydraulischer Verstellpropeller nach einem der Ansprüche 1 bis 3, **dadurch gekennzeichnet, dass** die Größe der beiden Verstellkolben (20, 22) so bemessen ist, dass eine Verstellung des Anstellwinkels der Propellerblätter (.14) unter allen Betriebsbedingungen mit nur einem mit Hydraulikfluid beaufschlagten Verstellkolben (20, 22) gewährleistet ist.

## Claims

1. A hydraulic variable pitch propeller for an air, land or water craft, comprising at least two propeller blades (14) which are mounted in the region of a propeller hub (12) and the pitch of which can be controlled by means of a hydraulically powered piston assembly (18), **characterised in that** said piston assembly (18) comprises two servo pistons (20, 22) mechanically interconnected via a connecting tube (24), each assigned to an independent hydraulic circuit.

2. The hydraulic variable pitch propeller according to claim 1, **characterised in that** the two hydraulic circuits comprise a common valve assembly (40) by means of which the two servo pistons (20, 22) can be pressurised in synchronism with a desired servo pressure.

3. The hydraulic variable pitch propeller according to claim 2, **characterised in that** said valve assembly (40) and said servo pistons (20, 22) are interconnected via a double-walled control tube (36), comprising a ring-shaped passageway (50) which is assigned to one of the two hydraulic circuits and an axial passageway (44) which is assigned to the other of the two hydraulic circuits.

4. The hydraulic variable pitch propeller according to claim 3, **characterised in that** said control tube (36) cooperates with two control spools (73, 74) of the valve assembly (40), each assigned to one of the hydraulic circuits.

5. The hydraulic variable pitch propeller according to any one of the claims 2 to 4, **characterised in that** said valve assembly (40) comprises two independent hydraulic chambers which are supplied by two independent pressure sources and, via the control tube (36), hydraulically connected to pressure spaces (26, 28) which are each assigned to one of the servo pistons (20, 22).

6. The hydraulic variable pitch propeller according to any one of the claims 1 to 3, **characterised in that** the two servo pistons (20, 22) are dimensioned such that varying the pitch of the propeller blades (14) is assured under all operating conditions with just one of the servo pistons (20, 22) supplied with a hydraulic fluid.

## Revendications

1. Hélice à pas variable hydraulique pour un véhicule aérien, terrestre ou naval, comprenant au moins deux pales d'hélice (14) qui sont montées dans la région d'un moyeu d'hélice (12) et qui sont réglables quant à leur angle d'incidence au moyen d'un ensemble de piston (18) actionné hydrauliquement, **caractérisée en ce que** ledit ensemble de piston (18) comprend deux pistons de réglage (20, 22) interconnectés mécaniquement via un tube de connexion (24), chacun attribué à un circuit hydraulique indépendant.

2. Hélice à pas variable hydraulique selon la revendication 1, **caractérisée en ce que** les deux circuits hydrauliques comprennent un ensemble de soupape (40) commun, au moyen duquel les deux pistons de réglage (20, 22) peuvent être pressurisés de manière synchrone avec une servo-pression désirée.

3. Hélice à pas variable hydraulique selon la revendication 2, **caractérisée en ce que** ledit ensemble de soupape (40) et lesdits pistons de réglage (20, 22) sont interconnectés via un tube de commande (36) à double paroi qui comprend un canal annulaire (50) qui est attribué à un des deux circuits hydrauliques est un canal axial (44) qui est attribué à l'autre des deux circuits hydrauliques.

4. Hélice à pas variable hydraulique selon la revendication 3, **caractérisée en ce que** ledit tube de commande (36) coopère avec deux tiroirs de commande (73, 74) de l'ensemble de soupape (40), chacun attribué à un des circuits hydrauliques.

5. Hélice à pas variable hydraulique selon l'une quelconque des revendications 2 à 4, **caractérisée en ce que** ledit ensemble de soupape (40) comprend deux chambres hydrauliques qui sont indépendantes alimentées par deux sources de pressions indépendantes et, via le tube de commande (36), hydrauliquement connectées à des espaces de pression (26, 28) qui sont chacun attribués à un des pistons de réglage (20, 22).

6. Hélice à pas variable hydraulique selon l'une quelconque des revendications 1 à 3, **caractérisée en ce que** les deux pistons de réglage (20, 22) sont dimensionnés de manière qu'un réglage de l'angle d'incidence des pales d'hélice (14) est assuré dans toutes les conditions de fonctionnement avec seulement un des pistons de réglage (20, 22) alimenté d'un fluide hydraulique.
